# EUROPÄISCHE PATENTSCHRIFT

(11) **EP 1 808 925 B1**
(45) Veröffentlichungstag und Bekanntmachung des Hinweises auf die Patenterteilung: **03.11.2010**
(21) Anmeldenummer: 07100522.7
(22) Anmeldetag: 15.01.2007
(51) Int. Cl.: H01M 8/04, F02M 59/46

(54) **Druckminderungseinrichtung für Brennstoffzellensystem mit einer Vielzahl von einzeln ansteuerbaren Schaltventilen und Verfahren hierfür**
Pressure reducing device for fuel cell system comprising a plurality of individually controllable switching valves and method therefore
Dispositif de réduction de pression pour système de pile à combustible comprenant une pluralité de soupapes individuellement contrôlable et son procédé

(30) Priorität: 16.01.2006 DE 102006002512
(43) Veröffentlichungstag der Anmeldung: 18.07.2007
(73) Patentinhaber: Deutsches Zentrum für Luft- und Raumfahrt e.V., 51147 Köln (DE)
(72) Erfinder: Kaz, Till, 70186, Stuttgart (DE)
(74) Vertreter: Hoeger, Stellrecht & Partner Patentanwälte

(56) Entgegenhaltungen:
- DE-A1- 10 029 468
- FR-A- 2 857 632
- US-A1- 2004 137 300
- US-A1- 2004 157 097
- US-A1- 2005 016 605

## Beschreibung

Die Erfindung betrifft ein Brennstoffzellensystem, umfassend mindestens einen Brennstoffzellenblock, mindestens einen Druckbehälter für Brennstoff und/oder Oxidator, welcher an den mindestens einen Brennstoffzellenblock gekoppelt ist, und eine dem mindestens einen Druckbehälter zugeordnete Druckminderereinrichtung.

Die Erfindung betrifft ferner ein Verfahren zur Bereitstellung von Brennstoff und/oder Oxidator an einen Brennstoffzellenblock, bei dem der Brennstoff und/oder der Oxidator aus einem Druckbehälter bereitgestellt wird und eine Druckminderereinrichtung durchläuft.

In einem Druckbehälter wird gasförmiger Brennstoff bzw. gasförmiger Oxidator unter hohem Druck gespeichert. Zum optimalen Betrieb des Brennstoffzellenblocks muss dieser Druck heruntergesetzt werden, wozu eine Druckminderereinrichtung dient.

Aus der WO 2005/041336 A2 ist ein Brennstoffzellensystem mit wenigstens einer Brennstoffzelle und mit einem Kraftstoff-Versorgungssystem für die Brennstoffzelle bekannt, wobei die Brennstoffzelle und das Kraftstoff-Versorgungssystem als voneinander unabhängige Teilsysteme des Brennstoffzellensystems ausgebildet sind und die Brennstoffzelle und das Kraftstoff-Versorgungssystem trennbar miteinander verbunden sind.

Aus der EP 1 425 196 B1 ist ein Kraftfahrzeug mit einer Brennstoffzelle bekannt, wobei die Brennstoffzelle in einem vorderen Bereich des Fahrzeugs untergebracht und über eine Versorgungsleitung mit mindestens einem Wasserstoffbehälter zur Versorgung verbunden ist. Der Wasserstoffbehälter ist in einem hinteren Bereich des Fahrzeugs untergebracht. Es sind Mittel zum Ableiten der von der Zelle nicht verbrauchten Wasserstoffgase vorhanden. Eine oder mehrere Abführleitungen münden im oberen Bereich des Fahrzeugs, so dass die Wasserstoffgase im Wesentlichen über dem Fahrzeug freigegeben werden,

Aus der DE 101 19 339 A1 ist ein Brennstoffzellensystem mit einer Polymerelektrolytmembran-Brennstoffzelle bekannt, welches mindestens ein Mikroventil für die Zuleitung des Brennstoffs in die Brennstoffzelle, einen Drucksensor sowie eine elektronische Steuereinheit für die Schaltung des Mikroventils in Abhängigkeit von den durch den Drucksensor gelieferten Signalen aufweist.

Aus der DE 100 29 468 A1 ist ein Brennstoffzellensystem bekannt, welches aus einer Reformiereinheit für die Produktion einer wasserstoffreichen Gasmischung durch Reformierung einer Wasserstoff enthaltenden Verbindung und einer Brennstoffzelle für die Erzeugung einer elektromotorischen Kraft durch eine Reaktion zwischen Wasserstoff und Sauerstoff besteht. Es ist eine Wasserstofftrenneinheit zwischen der Reformiereinheit und der Brennstoffzelle angeordnet, wobei die Wasserstofftrenneinheit mit wasserstoffdurchlässigen Mitteln zum Erhalt eines Brennstoffgases durch Trennung des Wasserstoffgases von der Gasmischung versehen ist.

Der Erfindung liegt die Aufgabe zugrunde, ein Brennstoffzellensystem der eingangs genannten Art bereitzustellen, welche vorteilhafte Eigenschaften aufweist.

Diese Aufgabe wird bei dem eingangs genannten Brennstoffzellensystem erfindungsgemäß dadurch gelöst, dass die Druckminderereinrichtung eine Ventilbank mit einer Mehrzahl von Schaltventilen aufweist, welche individuell ansteuerbar sind, wobei durch Ansteuerung der Schaltventile die Gesamtnennweite der Druckminderereinrichtung für die Zuführung von Brennstoff und/oder Oxidator zu dem mindestens einen Brennstoffzellenblock einstellbar Ist und die Gesamtnennweite der Druckminderereinrichtung die Summe der Nennweiten aller offenen Schaltventile ist.

Aus dem Stand der Technik sind Druckminderereinrichtungen auf mechanischer Basis bekannt. Diese umfassen beispielsweise einstufige oder zweistufige Druckminderer. Sie weisen eine relativ große Masse (beispielsweise in der Größenordnung von 1 kg) auf und reagieren relativ träge.

Bei der erfindungsgemäßen Lösung ist eine Ventilbank mit einer Mehrzahl von Schaltventilen vorgesehen. Als Schaltventile lassen sich Mikroventile einsetzen, so dass die entsprechende Druckminderereinrichtung eine geringere Masse und geringe geometrische Abmessungen aufweist. Dadurch lässt sich das Brennstoffzellensystem vorteilhaft für mobile Anwendungen wie beispielsweise als Flugkörperantrieb einsetzen.

Ferner lassen sich über entsprechende Schaltventile, welche schnell schalten, erweiterte Steuerungs- und Regelungsmöglichkeiten realisieren. Beispielsweise ist es auch möglich, Schaltventile gepulst anzusteuern. Dadurch lässt es sich erreichen, dass sich ein "allmählicher" Übergang vom vollständig geschlossenen Zustand eines Schaltventils zu einem vollständig offenen Zustand eines Schaltventils erreichen. Insbesondere lässt sich das Öffnen (bzw. Schließen) gepulst schalten, wobei beispielsweise die Pulsfrequenz vergrößert wird. Auf diese Weise lässt sich eine Linearisierung der Druckverhältnisse beim Öffnen eines oder mehrerer Schaltventile erreichen.

Weiterhin lassen sich Schaltventile mit geringem Eigenverbrauch einsetzen.

Insbesondere ist eine Flusssteuerung für Brennstoff bzw. Oxidator möglich, ohne dass ein Flusssensor vorgesehen werden muss. Die Druckminderereinrichtung lässt sich wie ein Proportionalventil einsetzen, um, wenn die Last konstant ist, einen im Wesentlichen konstanten Fluss an Brennstoff und/oder Oxidator bereitzustellen und bei Erhöhung oder Erniedrigung der Last eine Flussanpassung zu ermöglichen. Durch die erfindungsgemäße Lösung lässt sich auf einfache Weise ein Druckabfall aufgrund Entleerung des Druckbehälters einstellen.

Ganz besonders vorteilhaft ist es, wenn die Schaltventile elektrisch ansteuerbar sind. Dadurch ergeben sich kurze Reaktionszeiten. Weiterhin lässt sich der Eigenverbrauch der Druckminderereinrichtung gering halten.

Ganz besonders vorteilhaft ist es, wenn die Schaltventile eine Schaltzeit aufweisen, welche kleiner als 50 ms und insbesondere kleiner als 10 ms ist. Insbesondere weisen die Schaltventile eine Reaktionszeit in der Größenordnung von 1 ms auf. Dadurch lässt sich beispielsweise ein Regelkreis realisieren, mit dem sich eine schnelle Anpassung erreichen lässt. Dadurch wiederum lässt sich dem mindestens einen Brennstoffzellenblock Brennstoff und Oxidator so zuführen, dass der Brennstoffzellenblock einen optimierten Wirkungsrad aufweist.

Die Gesamtnennweite, der Druckminderereinrichtung ist die Summe der Nennweiten aller offenen Schaltventile. Die Nennweite eines Schaltventils ist die Öffnungsweite, durch die Gas (Brennstoff bzw. Oxidator) durch das Schaltventil durchströmen kann. Über die Ventilbank mit der Mehrzahl von Schaltventilen lässt sich über die Anzahl der offenen Schaltventile die Gesamtnennweite auf einfache Weise einstellen.

Ganz besonders vorteilhaft ist es, wenn die Schaltventile NC-Schaltventile sind (NC - normally closed). Dies bedeutet, dass die Schaltventile im stromlosen Zustand geschlossen sind. Dadurch kann kein Brennstoff bzw. Oxidator aus dem entsprechenden Druckbehälter austreten, wenn die Schaltventile nicht entsprechend angesteuert sind.

Günstig ist es, wenn von der Druckminderereinrichtung zu dem mindestens einen Brennstoffzellenblock eine Leitung führt. Die Leitung mit dem darin aufgenommenen Brennstoff bzw. Oxidator hat eine Pufferwirkung. Die Leitung kann auch ein oder mehrere zusätzliche Pufferräume zur Volumenvergrößerung aufweisen. Bei Öffnung bzw. Schließen eines Schaltventils tritt an dem Brennstoffzellenblock aufgrund der Pufferwirkung kein großer Drucksprung auf. (Beispielsweise kann dadurch das Überschwingen der Regelgröße auf unter 10 % begrenzt werden.)

Günstig ist es, wenn die Druckminderereinrichtung eine Steuerungs- und/oder Regelungseinrichtung aufweist, durch welche die Schaltventile individuell ansteuerbar sind. Dadurch lässt sich durch entsprechende Öffnung bzw. Schließung von individuellen Schaltventilen der Druck, mit welchem der Brennstoff bzw. der Oxidator an dem Brennstoffzellenblock ansteht, einstellen. Weiterhin lässt sich ein konstanter Fluss an Brennstoff bzw. Oxidator bei der Zuführung zu dem Brennstoffzellenblock einstellen und dieser Fluss lässt sich an die Lastverhältnisse des Brennstoffzellenblocks anpassen. Beispielsweise lässt sich eine Proportionalsteuerung realisieren.

Insbesondere steht die Steuerungs- und/oder Regelungseinrichtung mit mindestens einem Drucksensor in Verbindung, durch welchen der Druck von dem mindestens einen Brennstoffzellenblock zugeführtem Brennstoff und/oder Oxidator messbar ist. Dadurch lässt sich ein Regelkreis realisieren, bei welchem der Druck, mit welchem Brennstoff bzw. Oxidator am Brennstoffzellenblock ansteht, die Regelgröße ist.

Insbesondere ist der mindestens eine Drucksensor an einer Leitung zwischen der Druckminderereinrichtung und dem mindestens einen Brennstoffzellenblock in einer Entfernung zu der Druckminderereinrichtung angeordnet. Dadurch lässt sich auf einfache Weise der Druck des Brennstoffs bzw. des Oxidators, mit welchem dieser an dem Brennstoffzellenblock ansteht, messen. Die Entfernung (bezogen auf das Leitungsvolumen) sollte so groß sein, dass die Leitung eine Pufferfunktion hat und die Druckverhältnisse am Brennstoffzellenblock und am Drucksensor haben.

Günstigerweise sind die Schaltventile in Abhängigkeit von dem gemessenen Druck angesteuert, um einen entsprechenden Regelkreis zu realisieren.

Beispielsweise werden die Schaltventile so angesteuert, dass der Gesamtfluss zu dem mindestens einen Brennstoffzellenblock durch Einstellung der Gesamtnennweite mindestens näherungsweise konstant ist. Die Konstanz bezieht sich dabei zumindest auf konstant Lastverhältnisse des Brennstoffzellenblocks. Wenn sich die Lastverhältnisse ändern (Erhöhung des Stromverbrauchs oder Erniedrigung des Stromverbrauchs), dann kann eine entsprechende Flussanpassung erfolgen. Durch die erfindungsgemäße Druckminderereinrichtung lässt sich eine solche Flussanpassung auf einfache Weise realisieren.

Beispielsweise liegt der Anfangsdruck in dem mindestens einen Druckbehälter zwischen ca. 200 bar (2 · 10⁴ kPa) und 1000 bar (1 · 10⁵ kPa).

Beispielsweise liegt der Einstelldruck für den mindestens einen Brennstoffzellenblock im Bereich zwischen 1 bar (1 · 10² kPa) und 5 bar (5 · 10² kPa).

Es kann vorgesehen sein, dass einem Druckbehälter für Brennstoff eine erste Druckminderereinrichtung und einem Druckbehälter für Oxidator eine zweite Druckminderereinrichtung zugeordnet ist. Bei einer solchen Ausbildung lässt sich eine relativ große Gewichtsersparnis erreichen.

Günstigerweise sind die Schaltventile Einwegventile. Sie lassen sich dadurch entsprechend einfach mit geringer Masse und kurzen Reaktionszeiten ausbilden. Ferner lassen sie sich platzsparend ausbilden.

Beispielsweise sind die Schaltventile als Piezoventile ausgebildet. Sie weisen einen geringen elektrischen Eigenverbrauch auf, sie weisen kleine geometrische Abmessungen und eine geringe Masse auf.

Der Erfindung liegt ferner die Aufgabe zugrunde, ein Verfahren der eingangs genannten Art bereitzustellen, welches eine hohe Variationsbreite aufweist.

Diese Aufgabe wird bei dem eingangs genannten Verfahren erfindungsgemäß dadurch gelöst, dass die Druckminderereinrichtung eine Ventilbank mit einer Mehrzahl von individuell angesteuerten Schaltventilen umfasst und durch Ansteuerung der Schaltventile die Gesamtnennweite der Druckminderereinrichtung für die Zuführung von Brennstoff und/oder Oxidator zu dem Brennstoffzellenblock eingestellt wird, wobei die Gesamtnennweite der Druckminderereinrichtung die Summe der Nennweiten aller offenen Schaltventile ist.

Das erfindungsgemäße Verfahren weist die bereits im Zusammenhang mit dem erfindungsgemäßen Brennstoffzellensystem erläuterten Vorteile auf.

Weitere vorteilhafte Ausgestaltungen wurden ebenfalls bereits im Zusammenhang mit dem erfindungsgemäßen Brennstoffzellensystem erläutert.

Günstig ist es, wenn der Druck, mit welchem der Brennstoff und/oder Oxidator an dem Brennstoffzellenblock ansteht, die Regelgröße ist. Dadurch lässt sich dem Brennstoffzellenblock Brennstoff bzw. Oxidator so zuführen, dass dieser einen optimierten Wirkungsgrad aufweist.

Insbesondere wird die Gesamtnennweite in Abhängigkeit von dem gemessenen Druck eingestellt, mit welchem der Brennstoff und/oder Oxidator an dem Brennstoffzellenblock ansteht. Durch Einstellung der Gesamtnennweite über Einstellung der Anzahl der Schaltventile, welche geöffnet sind, lässt sich beispielsweise der Fluss an Brennstoff bzw. Oxidator im Wesentlichen konstant halten (bei konstanten Lastverhältnissen).

Bei einer Ausführungsform wird die Nennweite so eingestellt, dass sich ein mindestens näherungsweise konstanter Gesamtfluss an Brennstoff und/oder Oxidator zu dem Brennstoffzellenblock ergibt. Die Konstanz in den Flussverhältnissen ist dabei auf konstante Lastverhältnisse bezogen. Wenn sich die Lastverhältnisse ändern, kann eine Anpassung des Flusses an Brennstoff bzw. Oxidator erfolgen.

Günstig ist es, wenn die Schaltventile gepulst angesteuert werden, und zwar insbesondere beim Öffnungsvorgang bzw. Schließvorgang gepulst angesteuert werden. Dadurch wird ein Schaltventil nicht gemäß einer Stufenfunktion geöffnet bzw. geschlossen, sondern es erfolgt ein zeitlich variierendes Öffnen und Schließen, bevor das entsprechende Schaltventil dauerhaft geöffnet bzw. geschlossen ist. Dadurch lässt sich eine Linearisierung der Änderung der Druckverhältnisse aufgrund des Öffnens bzw. Schließens des entsprechenden Schaltventils erreichen.

Günstig ist es dann, wenn die Pulsfrequenz während des Öffnens bzw. Schließens erhöht wird, bis das Schaltventil vollständig geöffnet bzw. vollständig geschlossen ist. Dadurch lässt sich bei entsprechender Ansteuerung eine Linearisierung der Druckänderung aufgrund des Öffnens bzw. Schließens des Schaltventils erreichen.

Die nachfolgende Beschreibung bevorzugter Ausführungsformen dient im Zusammenhang mit der Zeichnung der näheren Erläuterung der Erfindung. Es zeigen:
- Figur 1: eine schematische Darstellung eines Ausführungsbeispiels eines erfindungsgemäßen Brennstoffzellensystems;
- Figur 2: eine schematische Darstellung des Verlaufs des Drucks in einem Druckbehälter über die Zeit bei allmählicher Entleerung des Druckbehälters;
- Figur 3: schematisch den zeitlichen Verlauf der Gesamtnennweite (GN) an einer erfindungsgemäßen Druckminderereinrichtung bei einem Druckverlauf gemäß Figur 2; und
- Figur 4: schematisch den zeitlichen Verlauf des Gesamtflusses bei entsprechender Ansteuerung der Druckminderereinrichtung.

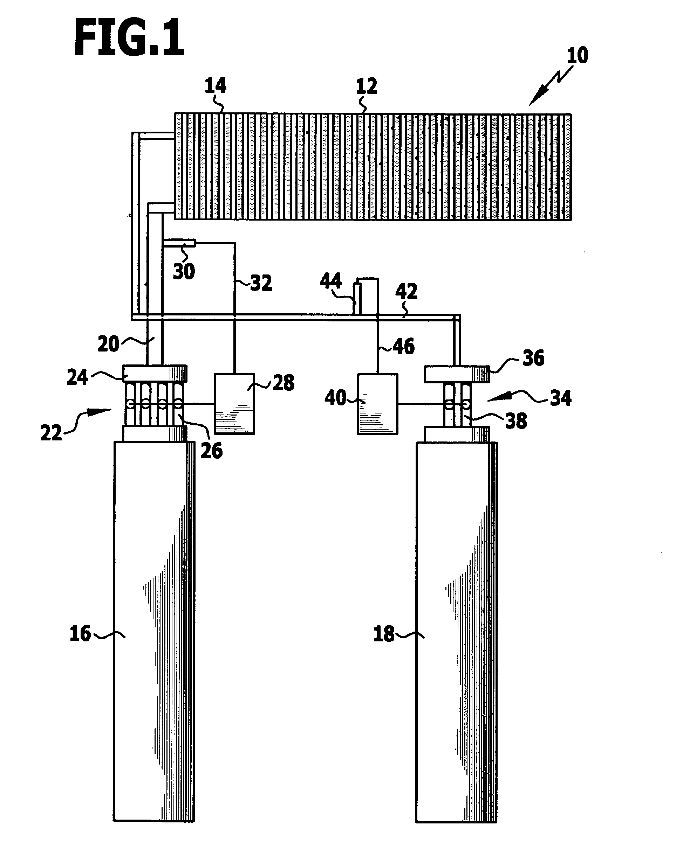

Ein Ausführungsbeispiel eines erfindungsgemäßen Brennstoffzellensystems, welches in Figur 1 schematisch gezeigt und dort mit 10 bezeichnet ist, umfasst (mindestens) einen Brennstoffzellenblock 12 (Brennstoffzellenstapel) mit einer Mehrzahl von Brennstoffzellen 14.

Die Brennstoffzellen 14 sind beispielsweise Polymermembran-Brennstoffzellen (PEFC), welche eine protonenleitende Folie als Elektrolyt umfassen.

Den Brennstoffzellen 14 wird Brennstoff und Oxidator zugeführt. Bei Polymermembran-Brennstoffzellen ist der Brennstoff Wasserstoff. Der Oxidator ist reiner Sauerstoff oder Luftsauerstoff.

An den Brennstofrzellen 14 erfolgt eine katalytische Umsetzung von Brennstoff und Oxidator unter Stromerzeugung. Der erzeugte Strom kann durch einen Verbraucher genutzt werden (In Figur 1 ist der Verbraucher nicht gezeigt).

Als Brennstoffspeicher ist ein Druckbehälter 16 vorgesehen, in dem der Brennstoff unter Druck aufgenommen ist. Beispielsweise ist der Brennstoff unter einem Druck von ca. 400 bar (4 · 10⁴ kPa) oder ca. 700 bar (7 · 10⁴ kPa) in dem Druckbehälter 16 gespeichert. Insbesondere ist der Druckbehälter 16 als Gasflasche ausgebildet.

Der Oxidator ist insbesondere in der Form von reinem Sauerstoff in einem Druckbehälter 18 gespeichert. Der Druckbehälter 18 ist ebenfalls insbesondere als Gasflasche ausgebildet. In ihm ist der Oxidator (vorzugsweise in der Form von reinem Sauerstoff) beispielsweise unter einem Druck von ca. 400 bar (4 · 10⁴ kPa) oder ca. 700 bar (7 · 10⁴ kPa) gespeichert.

Dem Brennstoffzellenblock 12 wird der Brennstoff von dem Druckbehälter 16 über eine Leitung 20 zugeführt. Die Leitung 20 mündet in einen Verteiler am Brennstoffzellenblock 12 (in der Zeichnung nicht gezeigt), über den die einzelnen Brennstoffzellen 14 mit Brennstoff versorgt werden. Dem Brennstoffzellenblock 12 wird der Brennstoff unter einem Druck von beispielsweise ca. 2 bar zugeführt. Zur Druckherabsetzung ist eine erste Druckminderereinrichtung 22 vorgesehen, welche dem Druckbehälter 16 nachgeordnet ist. Die Leitung 20 führt von der ersten Druckminderereinrichtung 22 zu dem Brennstoffzellenblock 12. Ferner ist der Druckbehälter 16 an die erste Druckminderereinrichtung 22 angeschlossen.

Die erste Druckminderereinrichtung 22 weist eine Ventilbank 24 mit einer Mehrzahl von Schaltventilen 26 auf. Die Schaltventile 26 sind Einwegventile, welche im geöffneten Zustand Brennstoff von dem Druckbehälter 16 in die Leitung 20 durchlassen. Die Schaltventile 26 weisen zwei Schaltzustände auf, nämlich offen und geschlossen.

Die Ventilbank 24 umfasst mindestens zwei Schaltventile 26 und vorzugsweise mindestens zehn solcher Schaltventile 26. Es können beispielsweise 50 oder mehr Schaltventile 26 vorgesehen sein.

Die Schaltventile 26 sind als NC-Schaltventile ausgebildet (NC - normally closed), das heißt im stromlosen Zustand sind sie geschlossen und verhindern dadurch ein Austreten von Brennstoff aus dem Druckbehälter 16.

Die Schaltventile 26 sind individuell ansteuerbar. Zur Ansteuerung ist eine Steuerungs- und/oder Regelungseinrichtung 28 vorgesehen, welche über Steuerleitungen an die Schaltventile 26 gekoppelt ist.

An der Leitung 20 ist ein Drucksensor 30 angeordnet, welcher den tatsächlichen Druck misst, mit welchem Brennstoff dem Brennstoffzellenblock 12 zugeführt wird. Der Drucksensor 30 ist über eine Signalleitung 32 mit der Steuerungs- und/oder Regelungseinrichtung 28 verbunden und liefert dieser die entsprechenden Druckmesswerte. Insbesondere lassen sich die Schaltventile 26 durch die Steuerungs- und/oder Regelungseinrichtung 28 gepulst ansteuern, wobei die Pulsfrequenz veränderlich sein kann.

Die Schaltventile 26 sind beispielsweise als Piezoventile ausgebildet. Sie sind elektrisch ansteuerbar und weisen eine kurze Reaktionszeit auf, die unterhalb von 50 ms und insbesondere unterhalb von 10 ms liegt. Die Schaltventile 26 der Ventilbank 24 sind kleine Mikroventile, welche schnell reagieren und eine individuelle kleine Nennweite aufweisen. Die Gesamtnennweite der ersten Druckminderereinrichtung 22 wird durch entsprechende Ansteuerung der Gesamtzahl der Schaltventile 26 über die Steuerungs- und/oder Regelungseinrichtung 28 angesteuert. Wenn alle Schaltventile 26 geschlossen sind, dann ist die Gesamtnennweite Null. Wenn alle Schaltventile 26 der Ventilbank 24 geöffnet sind, dann ist die Gesamtnennweite die Summe der individuellen Nennweiten aller Schaltventile 26.

Dem Druckbehälter 18 ist eine zweite Druckminderereinrichtung 34 zugeordnet, welche eine Ventilbank 36 mit einer Mehrzahl von Schaltventilen 38 aufweist. Die Schaltventile 38 sind grundsätzlich gleich ausgebildet wie die Schaltventile 26 und die zweite Druckminderereinrichtung 34 ist nach dem gleichen Prinzip ausgebildet wie die erste Druckminderereinrichtung 22. Insbesondere ist der zweiten Druckminderereinrichtung 34 eine Steuerungs- und/oder Regelungseinrichtung 40 zugeordnet, über welche die Schaltventile 38 über entsprechende Signalleitungen individuell ansteuerbar sind.

Von der zweiten Druckminderereinrichtung 34 führt eine Leitung 42 zu dem Brennstoffzellenblock 12. Diese Leitung 42 steht in Verbindung mit einem Verteiler, über welchen die Brennstoffzellen 14 des Brennstoffzellenblocks 12 mit Oxidator versorgbar sind.

An der Leitung 42 ist ein Drucksensor 44 angeordnet, welcher über eine Signalleitung 46 seine Druckmesswerte der Steuerungs- und/oder Regelungseinrichtung 40 bereitstellt. Über den Drucksensor 44 lässt sich der Oxidatordruck bei der Zuführung zu dem Brennstoffzellenblock 12 ermitteln.

Die erste Druckminderereinrichtung 22 und die zweite Druckminderereinrichtung 34 sind als Ventilbänke 24 bzw. 36 mit einer Mehrzahl von Mikroventilen 26, 38 aufgebaut. Diese Mikroventile 26, 38 weisen kleine Nennweiten auf und reagieren schnell. Dadurch lassen sich die Druckminderereinrichtungen 22 und 34 mit relativ geringer Masse ausbilden.

Durch die kurzen Reaktionszeiten ist eine Flusssteuerung möglich. Beispielsweise lässt sich eine Proportionalregelung des Brennstoffflusses bzw. Oxidatorflusses zu dem Brennstoffzellenblock 12 realisieren. Weiterhin ist der elektrische Eigenverbrauch der Schaltventile 26, 38 relativ gering.

Das Brennstoffzellensystem 10 umfasst weitere Komponenten wie beispielsweise Kühleinrichtungen, welche in Figur 1 nicht gezeigt sind.

### Das erfindungsgemäße Brennstoffzellensystem 10 funktioniert wie folgt:

Dem Brennstoffzellenblock 12 wird Brennstoff aus dem Druckbehälter 16 und Oxidator aus dem Druckbehälter 18 bereitgestellt. Durch die erste Druckminderereinrichtung 22 und die zweite Druckminderereinrichtung 34 erfolgt eine Druckherabsetzung, um Brennstoff bzw. Oxidator unter einem geeigneten Druck dem Brennstoffzellenblock 12, bei welchem dieser einen optimierten Wirkungsgrad hat, bereitstellen zu können.

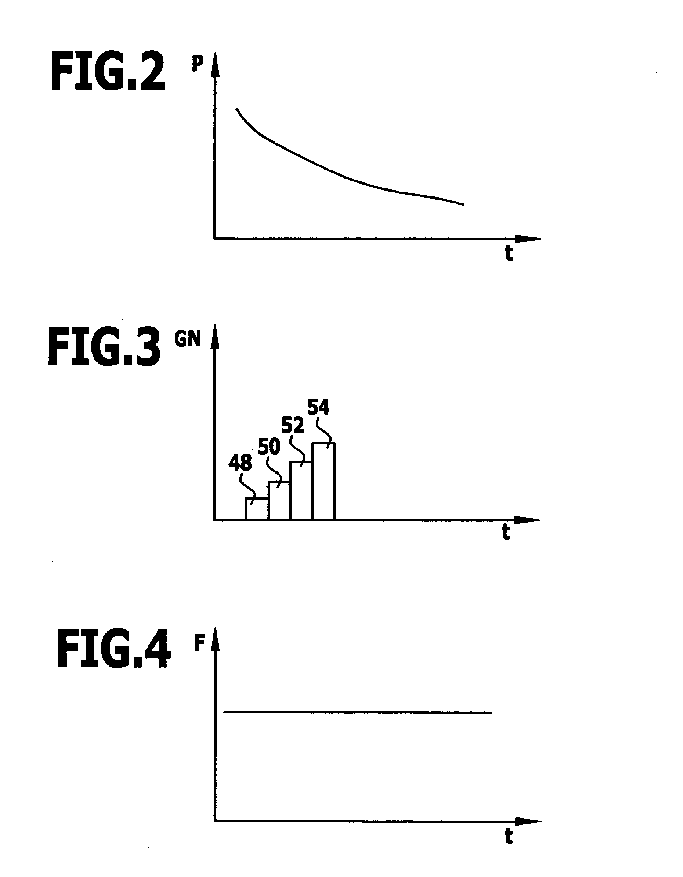

Der Druck, in welchem der Brennstoff in dem Druckbehälter 16 und der Oxidator in dem Druckbehälter 18 steht, nimmt im Laufe der Zeit aufgrund Entleerung des Druckbehälters 16 bzw. des Druckbehälters 18 ab. Dies ist schematisch in Figur 2 gezeigt.

Durch die erfindungsgemäße Lösung lässt sich über individuelle Ansteuerung der Schaltventile 26 durch die Steuerungs- und/oder Regelungseinrichtung 38 bzw. durch Ansteuerung der Schaltventile 38 über die Steuerungs- und/oder Regelungseinrichtung 40 der notwendige Druck für den Brennstoffzellenblock 12 aufrechterhalten. Dies wird im Folgenden anhand der Brennstoffzuführung erläutert:
Beispielsweise ist bei hohem Druck im Druckbehälter 16 nur ein Schaltventil 48 (Figur 3) der Ventilbank 24 geöffnet. Die Gesamtnennweite GN der ersten Druckminderereinrichtung 22 ist dann die Nennweite des ersten Schaltventils 48. Wenn der Druck im Druckbehälter 16 weiter abfällt (Figur 2), dann lässt sich über sukzessive Öffnung eines zweiten Schaltventils 50, eines dritten Schaltventils 52, eines vierten Schaltventils 54 usw. die Gesamtnennweite erhöhen. Diese ist die Summe der Nennweiten aller offenen Schaltventile. Dadurch lässt sich der notwendige Druck, mit welchem der Brennstoff an dem Brennstoffblock 12 ansteht, in einem optimierten Bereich einstellen. Es lässt sich dabei ein im Wesentlichen konstanter Fluss F (Figur 4) trotz Druckabfall im Druckbehälter 16 erreichen. Dadurch wird der Brennstoffzellenblock 12 auch bei Druckabfall im Druckbehälter 16 aufgrund dessen Entleerung gleichmäßig mit Brennstoff unter dem erforderlichen Druck versorgt.
Es kann auch vorgesehen sein, dass beim Öffnen (bzw. Schließen) eines Schaltventils 26 dieses gepulst angesteuert wird, um ein "allmähliches Öffnen" durch schnelle Öffnungs- und Schließvorgänge entsprechend der Pulsung zu erreichen. Beispielsweise erfolgt eine Pulsansteuerung mit einer allmählich zunehmenden Frequenz bis das entsprechende Schaltventil 26 dauerhaft geöffnet ist. Dadurch lässt sich eine Linearisierung der Druckverhältnisse beim Öffnen (bzw. Schließen) eines Schaltventils 26 erreichen, das heißt es werden plötzliche Drucksprünge aufgrund des Öffnens (bzw. Schließens) eines Schaltventils 26 verhindert.
Beispielsweise ist auch eine Flussanpassung möglich, wenn ein Verbraucher, wenn an den Brennstoffzellenblock 12 angeschlossen ist, eine größere oder kleinere Strommenge verbraucht.
Über den Drucksensor 30 wird der Druck in der Leitung 20 gemessen und der Druckwert wird an die Steuerungs- und/oder Regelungseinrichtung 28 weitergegeben. Dadurch lässt sich ein Regelkreis realisieren, wobei über individuelle Ansteuerung der Schaltventile 26 des Ventilblocks 24 die Gesamtnennweite der ersten Druckminderereinrichtung 22 so eingestellt wird, dass beispielsweise der Fluss F (Figur 4) im Wesentlichen konstant bleibt. Dieser im Wesentlichen konstante Fluss lässt sich dabei einstellen, ohne dass ein Flusssensor notwendig ist.
Insbesondere lässt sich die Ventilbank 24 im Sinne eines Proportionalventils einsetzen.
Durch die Leitung 20 zwischen der ersten Druckminderereinrichtung 22 und dem Brennstoffzellenblock 12 und dem darin befindlichen Brennstoff wird eine Pufferfunktion erzielt, das heißt beim Öffnen bzw. Schließen von Schaltventilen 26 der Ventilbank 24 treten keine großen Drucksprünge in der Leitung 20 und damit für die Brennstoffzuführung zu dem Brennstoffzellenblock 12 auf.
Das erfindungsgemäße Brennstoffzellensystem lässt sich vorteilhafterweise in mobilen Anwendungen einsetzen. Durch die erfindungsgemäße Lösung ist die Masse reduziert. (Konventionelle Druckminderereinrichtungen wie beispielsweise einstufige oder zweistufige Membrandruckminderer sind relativ schwer und weisen Massen in der Größenordnung von ca. 1 kg auf.)

## Patentansprüche

1. Brennstoffzellensystem, umfassend mindestens einen Brennstoffzellenblock (12), mindestens einen Druckbehälter (16; 18) für Brennstoff und/oder Oxidator, welcher an den mindestens einen Brennstoffzellenblock (12) gekoppelt ist, und eine dem mindestens einen Druckbehälter (16; 18) zugeordnete Druckminderereinrichtung (22; 34),
**dadurch gekennzeichnet, dass** die Druckminderereinrichtung (22; 34) eine Ventilbank (24; 36) mit einer Mehrzahl von Schaltventilen (26; 38) aufweist, welche individuell ansteuerbar sind, wobei durch Ansteuerung der Schaltventile (26; 38) die Gesamtnennweite der Druckminderereinrichtung (22; 34) für die Zuführung von Brennstoff und/oder Oxidator zu dem mindestens einen Brennstoffzellenblock (12) einstellbar ist und die Gesamtnennweite der Druckminderereinrichtung (22; 34) die Summe der Nennweiten aller offenen Schaltventile (26; 38) ist.

2. Brennstoffzellensystem nach Anspruch 1, **dadurch gekennzeichnet, dass** die Schaltventile (26; 38) elektrisch ansteuerbar sind.

3. Brennstoffzellensystem nach Anspruch 1 oder 2, **dadurch gekennzeichnet, dass** die Schaltventile (26; 38) eine Schaltzeit aufweisen, welche kleiner als 50 ms ist.

4. BrennstoffzeHensystem nach einem der vorangehenden Ansprüche, **dadurch gekennzeichnet, dass** die Schaltventile (26; 38) NC-Schaltventile sind.

5. Brennstoffzellensystem nach einem der vorangehenden Ansprüche,
**dadurch gekennzeichnet, dass** von der Druckminderereinrichtung (22; 34) zu dem mindestens einen Brennstoffzellenblock (12) eine Leitung (20; 42) führt.

6. Brerlnstoffzellensystem nach einem der vorangehenden Ansprüche,
**dadurch gekennzeichnet, dass** die Druckminderereinrichtung (22; 34) eine Steuerungs- und/oder Regelungseinrichtung (28; 40) aufweist, durch welche die Schaltventile (26; 38) individuell ansteuerbar sind.

7. Brennstoffzellensystem nach Anspruch 6, **dadurch gekennzeichnet, dass** die Steuerungs- und/oder Regelungseinrichtung (28; 40) mit mindestens einem Drucksensor (30; 44) in Verbindung steht, durch welchen der Druck von dem mindestens einen Brennstoffzellenblock (12) zugeführtem Brennstoff oder Oxidator messbar ist.

8. Brennstoffzellensystem nach Anspruch 7, **dadurch gekennzeichnet, dass** der mindestens eine Drucksensor (30; 44) an einer Leitung (20; 42) zwischen der Druckminderereinrichtung (22; 34) und dem mindestens einen Brennstoffzellenblock (12) angeordnet ist.

9. Brennstoffzellensystem nach Anspruch 7 oder 8, **dadurch gekennzeichnet, dass** die Schaltventile (26; 38) in Abhängigkeit von dem gemessenen Druck angesteuert sind.

10. Brennstoffzellensystem nach einem der Ansprüche 6 bis 9, **dadurch gekennzeichnet, dass** die Schaltventile (26; 38) so angesteuert sind, dass der Gesamtfluss zu dem Brennstoffzellenblock (12) durch Einstellung der Gesamtnennweite mindestens näherungsweise konstant ist.

11. Brennstoffzellensystem nach einem der vorangehenden Ansprüche, **dadurch gekennzeichnet, dass** der Anfangsdruck in dem mindestens einen Druckbehälter (16; 18) im Bereich zwischen 200 bar (2 · 10⁴ kPa) und 1000 bar (1 · 10⁵ kPa) liegt.

12. Brennstoffzellensystem nach einem der vorangehenden Ansprüche, **dadurch gekennzeichnet, dass** der Einstellungsdruck für den mindestens einen Brennstoffzellenblock (12) im Bereich zwischen 1 bar (1 · 10² kPa) und 5 bar (5 · 10² kPa) liegt.

13. Brennstoffzellensystem nach einem der vorangehenden Ansprüche, **dadurch gekennzeichnet, dass** einem Druckbehälter (16) für Brennstoff eine erste Druckminderereinrichtung (22) und einem Druckbehälter (18) für Oxidator eine zweite Druckminderereinrichtung (34) zugeordnet sind.

14. Brennstoffzellensystem nach einem der vorangehenden Ansprüche, **dadurch gekennzeichnet, dass** die Schaltventile (26; 38) Einwegventile sind.

15. Brennstoffzellensystem nach einem der vorangehenden Ansprüche, **dadurch gekennzeichnet, dass** die Schaltventile (26) als Piezoventile ausgebildet sind.

16. Verfahren zur Bereitstellung von Brennstoff und/oder Oxidator an einen Brennstoffzellenblock, bei dem der Brennstoff und/oder der Oxidator aus einem Druckbehälter bereitgestellt wird und eine Druckminderereinrichtung durchläuft,
**dadurch gekennzeichnet, dass** die Druckminderereinrichtung eine Ventilbank mit einer Mehrzahl von individuell angesteuerten Schaltventilen umfasst und durch Ansteuerung der Schaltventile die Gesamtnennweite der Druckminderereinrichtung für die Zuführung von Brennstoff und/oder Oxidator zu dem Brennstoffzellenblock eingestellt wird, wobei die Gesamtnennweite der Druckminderereinrichtung die Summe der Nennweiten aller offenen Schaltventile ist.

17. Verfahren nach Anspruch 16, **dadurch gekennzeichnet, dass** der Druck, mit welchem der Brennstoff und/oder der Oxidator an dem Brennstoffzellenblock ansteht, die Regelgröße ist.

18. Verfahren nach Anspruch 16 oder 17, **dadurch gekennzeichnet, dass** die Gesamtnennweite in Abhängigkeit von dem gemessenen Druck eingestellt wird, mit welchem der Brennstoff und/oder der Oxidator an dem Brennstoffzellenblock ansteht.

19. Verfahren nach einem der Ansprüche 16 bis 18, **dadurch gekennzeichnet, dass** die Gesamtnennweite so eingestellt wird, dass sich mindestens näherungsweise ein konstanter Gesamtfluss an Brennstoff und/oder Oxidator zu dem Brennstoffzellenblock ergibt.

20. Verfahren nach einem der Ansprüche 16 bis 19, **dadurch gekennzeichnet, dass** die Schaltventile gepulst angesteuert werden.

21. Verfahren nach Anspruch 20, **dadurch gekennzeichnet, dass** die Pulsfrequenz erhöht wird.

## Claims

1. Fuel cell system, comprising at least one fuel cell block (12), at least one pressure vessel (16; 18) for fuel and/or oxidizing agent, which is coupled to the at least one fuel cell block (12), and a pressure reducing device (22; 34) associated with the at least one pressure vessel (16; 18), **characterised in that** the pressure reducing device (22; 34) has a valve group (24; 36) with a plurality of switch-over valves (26; 38), which can be individually controlled, the overall orifice size of the pressure reducing device (22; 34) being adjustable for the supply of fuel and/or oxidizing agent to the at least one fuel cell block (12) by controlling the switch-over valves (26; 38), and the overall orifice size of the pressure reducing device (22; 34) being the sum of the orifice sizes of all the open switch-over valves (26; 38).

2. Fuel cell system according to claim 1, **characterised in that** the switch-over valves (26; 38) can be controlled electrically.

3. Fuel cell system according to claim 1 or 2, **characterised in that** the switch-over valves (26; 38) have a switching time which is less than 50 ms.

4. Fuel cell system according to any one of the preceding claims, **characterised in that** the switch-over valves (26; 38) are NC switch-over valves.

5. Fuel cell system according to any one of the preceding claims, **characterised in that** a line (20; 42) leads from the pressure reducing device (22; 34) to the at least one fuel cell block (12).

6. Fuel cell system according to any one of the preceding claims, **characterised in that** the pressure reducing device (22; 34) has an open-loop and/or closed-loop control device (28; 40), by means of which the switch-over valves (26; 38) can be individually controlled.

7. Fuel cell system according to claim 6, **characterised in that** the open-loop and/or closed-loop control device (28; 40) is connected to at least one pressure sensor (30; 44), by means of which the pressure of fuel or oxidizing agent supplied to the at least one fuel cell block (12) can be measured.

8. Fuel cell system according to claim 7, **characterised in that** the at least one pressure sensor (30; 44) is arranged on a line (20; 42) between the pressure reducing device (22; 34) and the at least one fuel cell block (12).

9. Fuel cell system according to claim 7 or 8, **characterised in that** the switch-over valves (26; 38) are controlled in dependence on the measured pressure.

10. Fuel cell system according to any one of claims 6 to 9, **characterised in that** the switch-over valves (26; 38) are controlled in such a way that the total flow to the fuel cell block (12) is at least approximately constant by adjusting the overall orifice size.

11. Fuel cell system according to any one of the preceding claims, **characterised in that** the initial pressure in the at least one pressure vessel (16; 18) is in the range between 200 bar (2 · 10⁴ kPa) and 1000 bar (1 · 10⁵ kPa).

12. Fuel cell system according to any one of the preceding claims, **characterised in that** the adjustment pressure for the at least one fuel cell block (12) is in the range between 1 bar (1 · 10² kPa) and 5 bar (5 · 10² kPa).

13. Fuel cell system according to any one of the preceding claims, **characterised in that** a first pressure reducing device (22) is associated with a pressure vessel (16) for fuel and a second pressure reducing device (34) is associated with a pressure vessel (18) for oxidizing agent.

14. Fuel cell system according to any one of the preceding claims, **characterised in that** the switch-over valves (26; 38) are one-way valves.

15. Fuel cell system according to any one of the preceding claims, **characterised in that** the switch-over valves (26) are configured as piezo valves.

16. Method for providing fuel and/or oxidizing agent to a fuel cell block, in which the fuel and/or the oxidizing agent is provided from a pressure vessel and runs through a pressure reducing device, **characterised in that** the pressure reducing device comprises a valve group with a plurality of individually controlled switch-over valves and the overall orifice size of the pressure reducing device for the supply of fuel and/or oxidizing agent to the fuel cell block is adjusted by controlling the switch-over valves, the overall orifice size of the pressure reducing device being the sum of the orifice sizes of all the open switch-over valves.

17. Method according to claim 16, **characterised in that** the pressure at which the fuel and/or the oxidizing agent is available at the fuel cell block is the control variable.

18. Method according to claim 16 or 17, **characterised in that** the overall orifice size is adjusted in dependence on the measured pressure at which the fuel and/or the oxidizing agent is available at the fuel cell block.

19. Method according to any one of claims 16 to 18, **characterised in that** the overall orifice size is adjusted in such a way that a constant total flow of fuel and/or oxidizing agent to the fuel cell block is at least approximately produced.

20. Method according to any one of claims 16 to 19, **characterised in that** the switch-over valves are controlled in pulsed manner.

21. Method according to claim 20, **characterised in that** the pulse frequency is increased.

## Revendications

1. Système de pile à combustible, comprenant au moins un bloc de pile à combustible (12), au moins un réservoir sous pression (16 ; 18) pour combustible et/ou oxydant, qui est couplé à l'au moins un bloc de pile à combustible (12), et un dispositif de réduction de pression (22 ; 34) associé à l'au moins un réservoir sous pression (16 ; 18), **caractérisé en ce que** le dispositif de réduction de pression (22 ; 34) présente un banc de soupapes (24 ; 36) avec une pluralité de soupapes de commande (26 ; 38) qui peuvent être commandées individuellement, la commande des soupapes de commande (26 ; 38) réglant le diamètre nominal entier du dispositif de réduction de pression (22 ; 34) pour l'amenée de combustible et/ou d'oxydant à l'au moins un bloc de pile à combustible (12) et le diamètre nominal entier du dispositif de réduction de pression (22 ; 34) étant la somme des diamètres nominaux de toutes les soupapes de commande ouvertes (26 ; 38).

2. Système de pile à combustible selon la revendication 1, **caractérisé en ce que** les soupapes de commande (26 ; 38) peuvent être commandées électriquement.

3. Système de pile à combustible selon la revendication 1 ou 2, **caractérisé en ce que** les soupapes de commande (26 ; 38) présentent un temps de manoeuvre qui est inférieur à 50 ms.

4. Système de pile à combustible selon l'une quelconque des revendications précédentes, **caractérisé en ce que** les soupapes de commande (26 ; 38) sont des soupapes de commande à commande numérique.

5. Système de pile à combustible selon l'une quelconque des revendications précédentes, **caractérisé en ce qu'**une conduite (20 ; 42) mène du dispositif de réduction de pression (22 ; 34) à l'au moins un bloc de pile à combustible (12).

6. Système de pile à combustible selon l'une quelconque des revendications précédentes, **caractérisé en ce que** le dispositif de réduction de pression (22 ; 34) présente un dispositif de commande et/ou de régulation (28 ; 40), par lequel les soupapes de commande (26 ; 38) peuvent être commandées individuellement.

7. Système de pile à combustible selon la revendication 6, **caractérisé en ce que** le dispositif de commande et/ou de régulation (28 ; 40) est en liaison avec au moins un capteur de pression (30 ; 44), par lequel peut être mesurée la pression du combustible ou de l'oxydant amené à l'au moins un bloc de pile à combustible (12).

8. Système de pile à combustible selon la revendication 7, **caractérisé en ce que** l'au moins un capteur de pression (30 ; 44) est disposé sur une conduite (20 ; 42) entre le dispositif de réduction de pression (22 ; 34) et l'au moins un bloc de pile à combustible (12).

9. Système de pile à combustible selon la revendication 7 ou 8, **caractérisé en ce que** les soupapes de commande (26 ; 38) sont commandées en fonction de la pression mesurée.

10. Système de pile à combustible selon l'une quelconque des revendications 6 à 9, **caractérisé en ce que** les soupapes de commande (26 ; 38) sont commandées de sorte que le flux entier vers le bloc de pile à combustible (12) soit au moins approximativement constant grâce au réglage du diamètre nominal entier.

11. Système de pile à combustible selon l'une quelconque des revendications précédentes, **caractérisé en ce que** la pression initiale dans l'au moins un réservoir sous pression (16 ; 18) se trouve dans la plage comprise entre 200 bars (2-10⁴kPa) et 1 000 bars (1-10⁵ kPa).

12. Système de pile à combustible selon l'une quelconque des revendications précédentes, **caractérisé en ce que** la pression de réglage pour l'au moins un bloc de pile à combustible (12) se trouve dans la plage comprise entre 1 bar (1-10² kPa) et 5 bars (5-10² kPa).

13. Système de pile à combustible selon l'une quelconque des revendications précédentes, **caractérisé en ce qu'**un premier dispositif de réduction de pression (22) est associé à un réservoir sous pression (16) pour combustible et un second dispositif de réduction de pression (34) est associé à un réservoir sous pression (18) pour oxydant.

14. Système de pile à combustible selon l'une quelconque des revendications précédentes, **caractérisé en ce que** les soupapes de commande (26 ; 38) sont des soupapes à une voie.

15. Système de pile à combustible selon l'une quelconque des revendications précédentes, **caractérisé en ce que** les soupapes de commande (26) sont réalisées comme des soupapes piézoélectriques.

16. Procédé de mise à disposition de combustible et/ou d'oxydant sur un bloc de pile à combustible pour lequel le combustible et/ou l'oxydant est mis à disposition à partir d'un réservoir sous pression et traverse un dispositif de réduction de pression, **caractérisé en ce que** le dispositif de réduction de pression comporte un banc de soupapes avec une pluralité de soupapes de commande commandées individuellement et par la commande des soupapes de commande est réglé le diamètre nominal entier du dispositif de réduction de pression pour l'amenée de combustible et/ou d'oxydant au bloc de pile à combustible, le diamètre nominal entier du dispositif de réduction de pression étant la somme des diamètres nominaux de toutes les soupapes de commande ouvertes.

17. Procédé selon la revendication 16, **caractérisé en ce que** la pression, avec laquelle le combustible et/ou l'oxydant est en place sur le bloc de pile à combustible, est la grandeur réglée.

18. Procédé selon la revendication 16 ou 17, **caractérisé en ce que** le diamètre nominal entier est réglé en fonction de la pression mesurée, avec laquelle le combustible et/ou l'oxydant est en place sur le bloc de pile à combustible.

19. Procédé selon l'une quelconque des revendications 16 à 18, **caractérisé en ce que** le diamètre nominal entier est réglé de sorte qu'il résulte au moins approximativement un flux entier constant de combustible et/ou d'oxydant vers le bloc de pile à combustible.

20. Procédé selon l'une quelconque des revendications 16 à 19, **caractérisé en ce que** les soupapes de commande sont commandées de manière pulsée.

21. Procédé selon la revendication 20, **caractérisé en ce que** la fréquence de pulsation est augmentée.
